# EUROPEAN PATENT SPECIFICATION

(11) **EP 1 740 647 B1**
(45) Date of publication and mention of the grant of the patent: **16.01.2008**
(21) Application number: 05716909.6
(22) Date of filing: 04.03.2005
(51) Int. Cl.: C08J 5/04, C08J 5/18, C08K 7/02, C08K 7/04, C08K 7/06, G09F 3/03

(54) **INTEGRATING SECURITY PARTICLES IN VALUE DOCUMENTS OR VALUE PRODUCTS**
INTEGRATION VON SICHERHEITSPARTIKELN IN WERTDOKUMENTEN UND WERTPRODUKTEN
INTEGRATION DE PARTICULES DE SECURITE A DES DOCUMENTS DE VALEUR OU A DES PRODUITS DE VALEUR

(30) Priority: 29.04.2004 EP 04101804
(43) Date of publication of application: 10.01.2007
(73) Proprietor: NV Bekaert SA, 8550 Zwevegem (BE)
(72) Inventor: VROMANT, Carl, B-9840 De Pinte (BE); SOETE, Karel, B-9270 Kalken (BE)
(74) Representative: Messely, Marc
(86) International application number: PCT/EP2005/050967
(87) International publication number: WO 2005/105902

(56) References cited:
- EP-A- 0 460 469
- GB-A- 2 309 710
- US-A- 4 265 703
- US-A- 4 664 971
- US-A1- 2003 173 550

## Description

### Field of the invention.

The present invention relates to a coherent sheet-like or tape-like product with security particles. According to a second aspect, the present invention also relates to a value product or value document comprising such a sheet-like or tape-like product. According to a third aspect, the invention relates to two methods of manufacturing a sheet-like or tape-like product.

### Background of the invention.

It is known to integrate security particles into substrates for authentication or identification purposes of value documents. US-A-4,408,156, EP-B-0 236 365 and EP-B-0 897 569 are only examples of prior art documents describing such value documents.
US-A-4,265,703 discloses a method of integrating security particles in the form of metal fibers into a fibrous structure such as paper. Indeed, the difference in specific gravity between metal fibers and paper-like material makes a homogeneous distribution of the metal fibers in a paper substrate difficult, if no precautions are taken. The precautions taken by US-A-4,265,703 consist in subjecting a bundle of metal fibers to a bath of a hydro soluble binder so as to make a coated bundle. The hydro soluble binder is either polyvinyl alcohol or starch. Hereafter, the fiber bundle is dried and cut into predetermined lengths of agglomerates binder-fiber. The agglomerates are mixed with paper fibers to form a sheet-like structure where the metal fibers are homogeneously distributed. The binder material serves as material for separating the filaments.
Despite successful application of this method, variations in concentrations of the fibers in the substrate are experienced.

When the security level to be provided by the fibers also depends upon the concentration of the fibers in the substrate, these variations in concentrations are unacceptable.
The method described in US-A-4,265,703 can also be applied to incorporate metal fibers at limited locations in value documents. These lim ited locations may take the form of bands or strips. Experience has shown that It is difficult to keep the width of such bands or strips within predetermined narrow limits. Furthermore, some dimensions, e.g. very small widths, are not obtainable. Here again, when the security level to be provided by the metal fibers also depends on the exact geographical location of the metal fibers In the value document, too big a variation in this geographical location is not acceptable.

US-A1-2003/0173550, EP-A1-0460469 and US-A-4,664,971 all disclose a sheet or sheet-like product comprising metal fibers or metal coated fibers and a binder for use in field of EMI or ESD.

### Summary of the invention.

It is an object of the present invention to avoid the drawbacks of the prior art.
It is another object of the present invention to provide more control of the concentration of security particles in the substrate of a value document.
It is yet another object of the present invention to provide for exactly determined geographical locations with security particles within a security document.
It is still another object of the present invention to provide for a robust method of integrating security particles into a value document, largely independent of the way of manufacturing the value documents.

According to a first aspect of the present invention, there is provided a coherent sheet-like or tape-like product adapted to be integrated into value products or documents. The said product comprises :
- security particles in the form of metal fibers or metal coated fibers with a concentration varying from 1.0x10⁻⁵g/cm² to 1.8x10⁻⁴g/cm².
- a paper or plastic compatible binder.

I n the context of the present invention, the terms "value products" refer to all types of valuable documents such as bank notes, bonds, passports, credit-cards, access tickets, ... The terms "value products" refer to all types of products with a high value such as medicine, perfume, jewelry, ... The security particles may be either integrated into the products or documents themselves or into the packaging.

The metal fibers or metal coated fibers may be nickel coated carbon fibers, stainless steel fibers or fibers of a metal with magnetic properties, irrespective of the length of the fibers (both short and long fibers). In order to function as "security particles", the fibers have parameters, which are detectably different from the substrate material. The detectable difference may take various forms such as optical difference, electrical conductivity, magnetic coercivity, harmonic response, microwave reflection, microwave absorptions.

Next to the security particles, other particles, without a security or identification function, may also be added. For example, it may be advantageous to add particles, which have an affinity with the substrate already at this stage in the sheet-like or tape-like product. In this sense, when the substrate comprises paper, it may advantageous to add cellulose fibers, next to the security particles.

In contrast with other applications such as filtration, it is not the purpose that the fibers form an independent network and that the fibers are entangled with each other. The purpose of the fibers is to function as security features and to be detectable, hence a relatively small concentration.

Advantageously, the binder is a water-soluble binder.
As an example, the binder may be selected from the group consisting of polyvinyl alcohols, methyl cellulose ethers, hydroxypropylmethylcellulose, polyethers from ethylene oxide, acrylic acid polymers or acrylic copolymers.
As a matter of a preferable example, methyl cellulose has following advantages as a binder in this context : it is a cheap binder material, any shaping or mixing can be done under room conditions, reuse of the methyl cellulose and of the material mixed with it, is possible. The binder material methyl cellulose easily disintegrates when heated.

The tape-like or sheet-like product, as such, has only a transitory existence. Its purpose is to control better the concentration of the security particles and the geometry of the region of security particles. This control is done at the level of the tape-like or sheet-like material and not at the level of the final value document or value product. Ultimately, the tape-like or sheet-like product is to integrate with the value document or value product. Once this integration step done, it is no longer possible to extract the tape-like or sheet-like material intact from the value document or value product. So during its life, the tape-like or sheet-like product must stay coherent and strong. At the time of integration with the value document or value product, the tape-like or sheet-like product must cease to exist as such.

Preferably, a plasticizer may be added and mixed together with the security particles and the binder material in the solvent. Such a plasticizer makes the sheet-like or tape-like product stronger and more flexible. An example of a plasticizer is polyethylene glycol. Another example is polyvinyl alcohol.

The plasticizer may also have another function, particularly in case the sheet-like or tape-like product is to be integrated in paper value documents. Paper manufacturing is done in a very humid atmosphere with a lot of water. Correct amounts of plasticizer present in the tape-like or sheet-like product may control the time required for the disintegration process of the tape-like or sheet-like material and its integration in the paper value documents. Next to plasticizers, titantiumdioxide (TiO₂) and carbonates may also fulfill this function. The higher the amount of plasticizer, TiO₂ or carbonates, the longer the disintegration process takes.

Also color additives may be mixed together with the security particles and the binder material. This may give a particular and predetermined color to the sheet-like or tape-like product. The given color may mask the presence of security particles.

Advantageously, particularly when used with paper as substrate material, the sheet-like or tape-like product is made porous, e.g. by making small perforations in the sheet-like or tape-like product. This porosity facilitates the evacuation of water during the integration of the sheet-like or tape-like product in a paper substrate.

According to a second aspect of the present invention, there is provided a value document or a value product in which or on which the tape-like or sheet-like product has been integrated.

According to a third aspect of the present invention, there are provided two methods of manufacturing a sheet-like or tape-like product.

The first method comprises the following steps :
a) providing a binder in a liquid form or loose form, e.g. in a solvent such as water ;
b) providing particles which will function as security particles;
c) mixing the particles in or with the binder;
d) casting the binder with the particles ;
e) drying or heat treating the cast binder with the particles to form a coherent sheet-like or tape-like product, where the concentration of said particles varies from 1.0 x 10⁻⁵g/cm² to 1.8 x 10⁻⁴g/cm².

One of the advantages of the present invention results from step c) : the particles are mixed with the binder material in a controllable and determinable concentration. If abstraction is made of the non-security particles, possible other additives and of the solvent, the only parameters are the amount of security particles, the amount of binder material and the degree of mixing. Both the amount of security particles and the amount of binder material can be exactly determined. The degree of mixing can be easily controlled e.g. by the revolutions of a screw in the mixture and by the working temperature. The mixed particles in the binder are cast and dried or heat-treated, e.g. to vaporize the solvent, and form a coherent sheet-like or tape-like product. The concentration of the security particles in this sheet-like or tape-like product and the variations hereof can be determined on this sheet-like or tape-like product before any integration into the final product. The concentration of the security particles in the sheet-like or tape-like product is directly related to the concentration of the security particles in the final product or final document.

In an embodiment of the invention, the tape-like or sheet-like product may be cast using an applicator such as a doctor blade.

The method further comprises the step of cutting the sheet-like or tape-like product. This additional step has the advantage of exactly determining the dimensions of the location where the security particles can be found. Moreover, this exact determination is done in advance prior to the final value product or value document manufacturing. This means that this separate and prior cutting makes the whole method more robust and less dependent upon the particular way of integrating the security particles into the final value document or onto a value product.

As a subsequent step, the dried binder with the security particles is integrated in the substrate of the value document or value product.

The second method comprises the following steps:
a) providing a substrate ;
b) providing security particles in the form of metal fibers or metal coated fibers on the substrate ;
c) casting or spraying a binder in liquid or loose form on the security particles ;
d) drying or heat treating the combination of binder and security particles so that a coherent sheet-like or tape-like product is obtained separable from the substrate.
In this second method, the concentration of security particles and the geometry of the region with security particles is controlled mainly in step b).

### Brief description of the drawings.

The invention will now be described into more detail with reference to the accompanying drawings wherein
- FI GURE 1 is a drawing of a cast and dried binder mixed with security particles;
- FIGURE 2a (upper view) and FIGURE 2b (cross-section) show a value document of paper;
- FIGURE 3a (upper view) and FIGURE 3b (cross-section) show a value document of plastic ;
- FIGURE 4 shows a package for a value product.

### Description of the preferred embodiments of the invention.

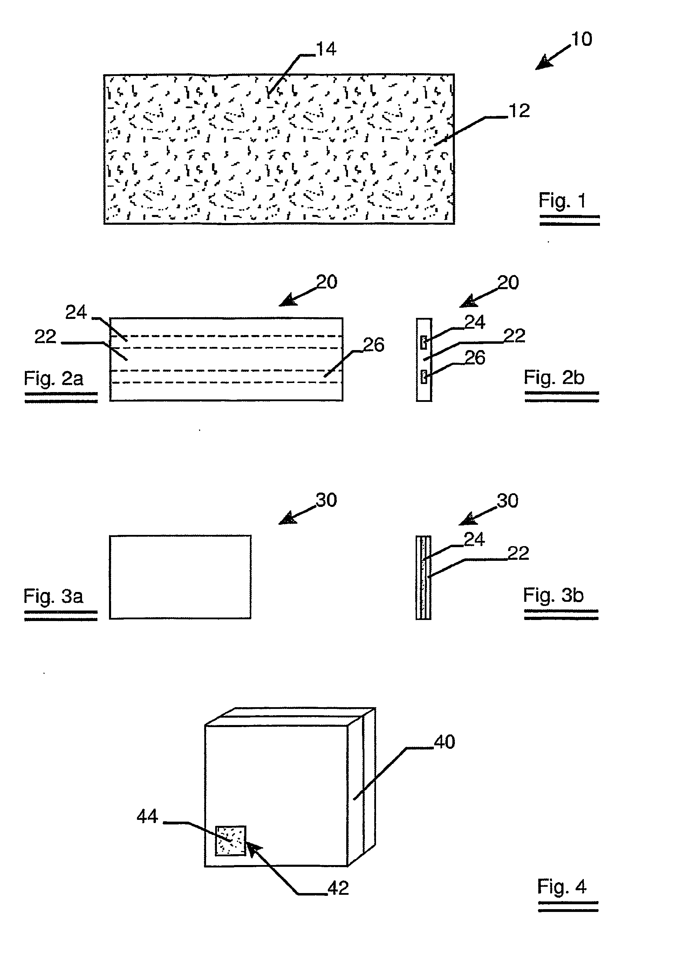

FIGURE 1 shows an sheet-like or tape-like product 10 as result of the invention method. The sheet-like or tape-like product 10 comprises a cast and dried solvent with binder 12 mixed with security particles 14.
The security particles 14 may be metal fibers. As a matter of example, the metal fibers have an equivalent diameter ranging from 1 µm to 25 µm, and an average length ranging from 0.05 m m to 15 mm. The length to equivalent diameter ratio is always greater than 5, preferably greater than 10. Fibers having an equivalent diameter of less than 1 µm are difficult and expensive to manufacture, while fibers with a diameter above 25 µm will harm the visual aspect of the value documents. The terms "equivalent diameter" refer to the diameter of an imaginary circle, which has the same surface as the surface of a fiber, cut perpendicular to the major axis of the fiber.

The sheet-like or tape-like product 10 is made in the following way :
a) an amount of binder such as methyl cellulose is poured in a receptacle filled with a solvent such as water ;
b) a predetermined amount of fibers 14 is poured in the same receptacle ;
c) the fibers 14 are mixed in the methyl cellulose in order to obtain a distribution which is as homogeneous as possible ; for example, the amount of fibers may range from 0.2 g fibers per liter solvent - methyl cellulose to 2.4 g fibers per liter solvent - methyl cellulose, e.g. from 0.4g/l to 1.2 g/l;
d) the slurry solvent - methyl cellulose 12 - fibers 14 is cast on a flat surface, e.g. a metal surface ;
e) the cast mixture is leveled to a predetermined thickness, e.g. a thickness varying between 30 µm and 500 µm, e.g. between 60 µm and 300 µm; this leveling can be done by means of a leveling lath, e.g. by means of the clearance of a doctor blade;
f) the leveled mixture is dried;
g) the dried mixture may be cut to the desired lengths and widths.
Any control on the concentration itself and on the variation of the concentration of the fibers 14 in the methyl cellulose can be done on the sheet-like or tape-like product 10. Any sheet-like or tape-like product not meeting the concentration specifications can be recuperated.
The cutting to the desired width may allow avoiding side effects on the concentration, if any.

The concentration in the sheet-like or tape-like product may range, for example, from 0.05 g/m² to 10.0 g/m², e.g. from 0.1 g/m² to 1.0 g/m², e.g. 0.5 g/m².

FIGURE 2a is an upper view and FIGURE 2b a cross-section of a value document 20 with a paper substrate 22 and with two small bands 24, 26 comprising fibers. An example of such a value document may be a bank note. The two small bands 24 originate from the sheet-like or tape-like product 10, which has been cut in advance to the desired width. As a result, the width can be determined with more accuracy than in the prior art case where the loose fibers are being integrated into the paper substrate during the paper manufacturing process. If the binder material is methyl cellulose dissolved in a solvent as water, it may dissolve partially or completely during the integration into the paper substrate as a result of the water used during paper manufacturing and the heat produced during paper manufacturing. This 'disappearance', however, has no negative influence on the concentration and the distribution of the fibers in the document.

FIGURE 3a is an upper view and FIGURE 3b is a cross-section of a value document 30 with a plastic substrate 32 and with a layer 34 comprising fibers. An example of such a value document may be a credit card or a plastic bank note. The value document 30 may be made by laminating the sheet-like or tape-like product 10 with the fibers 14 between two plastic foils 32. Here again, if methyl cellulose dissolved in a solvent as water is used as binder material, it may disappear partially or completely as a result of the heat generated during lamination.

FIGURE 4 is a schematic drawing of a packaging material 40 for a value product. The sheet-like or tape-like product 10 comprising the binder material 42 and the fibers 44 is glued on the packaging material 40.

## Claims

1. A coherent sheet-like or tape-like product (10) adapted to be integrated into value products or documents, said product comprising:
- security particles in the form of metal fibers (12) or metal coated fibers ;
- a paper or plastic compatible binder (14),
sheet-like or tape-like product having a concentration of security particles varying from 1.0x10⁻⁵ g /cm² to 1.8x10⁻⁴ g/cm².

2. A sheet-like or tape-like product according to claim 1 wherein said binder (14) is water soluble.

3. A sheet-like or tape-like product according to claim 2 wherein said binder is selected from the group consisting of polyvinyl alcohols, methyl cellulose ethers, hydroxypropylmethylcellulose, polyethers from ethylene oxide, acrylic acid polymers or acrylic copolymers.

4. A sheet-like or tape-like product according to any one of the preceding claims, wherein said product further comprises a plasticizer, titanium dioxide or carbonates.

5. A sheet-like or tape-like product according to claim 4, wherein said plasticizer is polyethylene glycol or polyvinylalcohol or a combination of both.

6. A sheet-like or tape like product according to any one of the preceding claims, wherein said product is provided with porosities to facilitate water evacuation.

7. A value product or value document comprising a sheet-like or tape-like product according to any one of the preceding claims.

8. A method of manufacturing a sheet-like or tape-like product (10) according to any one of claims 1 to 6, said method comprising the following steps:
a) providing a binder (14) in a liquid or loose form ;
b) providing security particles in the form of metal fibers (12) or metal coated fibers ;
c) mixing said particles in said binder ;
d) casting said binder with said particles ;
e) drying or heat treating said cast binder with said particles to form said sheet-like or tape-like product. where the concentration of said particles varies from 1.0x10⁻⁵g/cm² to 1.8x10⁻⁴g/cm².

9. A method of manufacturing a sheet-like or tape-like product (10) according to any one of claims 1 to 6, said method com prising the following steps:
a) providing a substrate ;
b) providing security particles in the form of metal fibers or metal coated fibers (12) on said substrate;
c) casting or spraying a binder (14) in liquid or loose form on said security particles ;
d) drying or heat treating said combination of binder and security particles so that a coherent sheet-like or tape-like product is obtained separable from said substrate.

## Patentansprüche

1. Kohärentes lagenartiges oder bandartiges Produkt (10), das zur Integration in Wertprodukte oder
- dokumente adaptiert ist, wobei das Produkt umfasst:
- Sicherheitspartikel in Form von Metallfasern (12) oder metallbeschichteten Fasern;
- ein mit Papier oder Kunststoff verträgliches Bindemittel (14),
wobei das lagenartige oder bandartige Produkt eine Konzentration der Sicherheitspartikel hat, die von 1,0 x 10⁻⁵ g/cm² bis 1,8 x 10-⁴g/cm² variiert.

2. Lagenartiges oder bandartiges Produkt nach Anspruch 1, wobei das Bindemittel (14) wasserlöslich ist.

3. Lagenartiges oder bandartiges Produkt nach Anspruch 2, wobei das Bindemittel aus der Gruppe bestehend aus Polyvinylalkoholen, Methylcelluloseethern, Hydroxypropylmethylcellulose, Polyethern von Ethylenoxid, Acrylsäurepolymeren oder Acrylcopolymeren ausgewählt ist.

4. Lagenartiges oder bandartiges Produkt nach einem der vorhergehenden Ansprüche, wobei das Produkt ferner einen Weichmacher, Titandioxid oder Carbonate umfasst.

5. Lagenartiges oder bandartiges Produkt nach Anspruch 4, wobei der Weichmacher Polyethylenglykol oder Polyvinylalkohol oder eine Kombination von beiden ist.

6. Lagenartiges oder bandartiges Produkt nach einem der vorhergehenden Ansprüche, wobei das Produkt mit Porosität ausgestattet ist, um das Austreten von Wasser zu erleichtern.

7. Wertprodukt oder Wertdokument, umfassend ein lagenartiges oder bandartiges Produkt nach einem der vorhergehenden Ansprüche.

8. Verfahren zur Fertigung eines lagenartigen oder bandartigen Produkts (10) nach einem der Ansprüche 1 bis 6, wobei das Verfahren die folgenden Schritte umfasst:
a) Bereitstellen eines Bindemittels (14) in flüssiger oder loser Form;
b) Bereitstellen von Sicherheitspartikeln in Form von Metallfasern (12) oder metallbeschichteten Fasern;
c) Mischen der Partikel in das Bindemittel;
d) Gießen des Bindemittels mit den Partikeln;
e) Trocknen oder Wärmebehandeln des gegossenen Bindemittels mit den Partikeln, um das lagenartige oder bandartige Produkt zu bilden, wobei die Konzentration der Partikel im Bereich von 1,0 x 10⁻⁵ g/cm² bis 1,8 x 10⁻⁴ g/cm² variiert.

9. Verfahren zur Fertigung eines lagenartigen oder bandartigen Produkts (10) nach einem der Ansprüche 1 bis 6, wobei das Verfahren die folgenden Schritte umfasst:
a) Bereitstellen eines Substrats;
b) Bereitstellen von Sicherheitspartikeln in Form von Metallfasern (12) oder metallbeschichteten Fasern auf dem Substrat;
c) Gießen oder Sprühen eines Bindemittels (14) in flüssiger oder loser Form auf die Sicherheitspartikel;
d) Trocknen oder Wärmebehandeln der Kombination von Bindemittel und Sicherheitspartikeln, so dass ein kohärentes lagenartiges oder bandartiges Produkt erhalten wird, welches von dem Substrat trennbar ist.

## Revendications

1. Produit (10) cohérent de type feuille ou de type bande adapté pour être intégré dans des produits de valeur ou des documents de valeur, ledit produit comprenant:
- des particules de sécurité sous la forme de fibres métalliques (12) ou de fibres enduites de métal ;
- un liant (14) compatible avec le papier ou le plastique,
ledit produit de type feuille ou de type bande ayant une concentration de particules de sécurité variant de
1,0×10⁻⁵ g/cm² à 1, 8×10⁻⁴ g/cm².

2. Produit de type feuille ou de type bande selon la revendication 1, dans lequel ledit liant (14) est soluble dans l'eau.

3. Produit de type feuille ou de type bande selon la revendication 2, dans lequel ledit liant est choisi parmi le groupe constitué de poly(alcools de vinyle), d'éthers de méthylcellulose, d'hydropropylméthyl-cellulose, de polyéthers d'oxyde d'éthylène, de polymères d'acide acrylique ou de copolymères acryliques.

4. Produit de type feuille ou de type bande selon l'une quelconque des revendications précédentes, dans lequel ledit produit comprend en plus un plastifiant, du dioxyde de titane ou des carbonates.

5. Produit de type feuille ou de type bande selon la revendication 4, dans lequel ledit plastifiant est du polyéthylèneglycol ou un poly(alcool de vinyle) ou une combinaison des deux.

6. Produit de type feuille ou de type bande selon l'une quelconque des revendications précédentes, dans lequel ledit produit est pourvu de porosités pour faciliter l'évacuation de l'eau.

7. Produit de valeur ou document de valeur comprenant un produit de type feuille ou de type bande selon l'une quelconque des revendications précédentes.

8. Procédé de fabrication d'un produit de type feuille ou de type bande (10) selon l'une quelconque des revendications 1 à 6, ledit procédé comprenant les étapes suivantes :
a) la fourniture d'un liant (14) sous une forme liquide ou lâche ;
b) la fourniture de particules de sécurité sous la forme de fibres métalliques (12) ou de fibres enduites de métal ;
c) le mélange desdites particules dans ledit liant ;
d) le coulage dudit liant avec lesdites particules ;
e) le séchage ou le traitement thermique dudit liant coulé avec lesdites particules pour former ledit produit de type feuille ou de type bande, où la concentration desdites particules varie de 1,0×10⁻⁵g/cm² à 1,8×10⁻⁴ g/cm².

9. Procédé de fabrication d'un produit de type feuille ou de type bande (10) selon l'une quelconque des revendications 1 à 6, ledit procédé comprenant les étapes suivantes .
a) la fourniture d'un substrat ;
b) la fourniture de particules de sécurité sous la forme de fibres métalliques ou de fibres enduites de métal (12) sur ledit substrat ;
c) le coulage ou la pulvérisation d'un liant (14) sous une forme liquide ou lâche sur lesdites particules de sécurité ;
d) le séchage ou le traitement thermique de ladite combinaison de liant et de particules de sécurité si bien qu'un produit cohérent de type feuille ou de type bande séparable dudit substrat est obtenu.
